# EUROPEAN PATENT SPECIFICATION

(11) **EP 4 565 785 B1**
(45) Date of publication and mention of the grant of the patent: **18.11.2026**
(21) Application number: 23721782.3
(22) Date of filing: 17.04.2023
(51) Int. Cl.: F03D 5/00

(54) **WIND GENERATOR**
WINDGENERATOR
AÉROGÉNÉRATEUR

(30) Priority: 04.08.2022 IT 202200016740
(43) Date of publication of application: 11.06.2025
(73) Proprietor: Massai, Simone, 52026 Castelfranco Piandiscò (IT)
(72) Inventor: Massai, Simone, 52026 Castelfranco Piandiscò (IT)
(74) Representative: Emmi, Mario
(86) International application number: PCT/IB2023/053909
(87) International publication number: WO 2024/028658

(56) References cited:
- WO-A2-2011/013105
- GB-A- 2 542 205

## Description

### Scope of the invention

The present invention relates to the technical field of wind generators.

Specifically, the invention refers to a particular wind generator which enables to obtain greater efficiencies than known wind generators.

### Brief outline of known art

Wind generators have long been known by now. Many types of wind generators exist in which a series of blades rotate because they are hit by wind flow. Their rotation is used to obtain energy, generally electric energy.

Wind generators with both vertical axis and horizontal axis rotating blades exist and their use is quite common by now.

For this reason, many technical publications relative to these types of generators are also known.

The known solutions with wind blades, whether they have vertical axis and horizontal axis, despite having good efficiency, do not enable to fully optimize the performance therefore the outputs, despite being good, are not optimal. Basically, this depends on the fact that a precise design of the profile of the blades is necessary and the efficiency strongly varies depending on geometrical features of blades.

In addition, these generators are physically limited by the Betz limit.

For example, in order to optimize the outputs of wind systems, a solution as described in the publication WO 2011/013105 has been devised.

Although the efficiencies have been improved according to this solution, the need for a wind generator which fully optimizes the performances with a construction which is simple and is not strongly dependent on the specific profile of blades themselves is still felt yet. Further prior art is disclosed in GB 2542205 A.

### Summary of the invention

Therefore, the aim of the present invention is to provide a new type of wind generator which resolves the aforesaid technical disadvantages.

In particular, the aim of the present invention is to provide a wind generator capable of optimizing its efficiency as a result of a structure which is simpler than known solutions in terms of constructive and design features.

Another aim of the present invention is to provide a solution of wind generator whose physical principle at its basis is not influenced by the Betz limit (therefore enabling better efficiencies to be obtained).

These and other aims are therefore achieved with the wind generator, according to claim 1.

The wind generator (1) according to the invention comprises a fixed part (10) and a movable part (20) configured to slide, in particular at least shift, with respect to the fixed part (10).

Advantageously, for example, the movable part (20) is movable, for example shiftable, between an extracted position with respect to the fixed part and a position retracted into said fixed part.

The fixed part forms a collection area for a fluid.

For example, the fixed part can have a closed bottom, for example through suitable wall (10'), which determines the formation of said collection area.

The movable part forms a through-channel which enables to direct the fluid from outside to the wind generator towards said collection area of the fixed part, therefore inside the generator.

According to the invention, the movable part has such a profile that when it is hit in use by a flow (for example wind or air in general), a low-pressure area is generated outside the generator and a high-pressure area is generated inside the generator, in particular in the collection area, in such a way that said pressure difference determines an extraction motion of the movable part (20) with respect to the fixed part.

Therefore, the extraction motion can advantageously be used for producing energy.

In fact, the collection area accumulates the entering fluid thus contributing to increasing the inner pressure of generator.

The particular profile contributes to reducing pressure outside and therefore the combined effect of inner pressure increase and pressure reduction outside the generator causes a pressure drop which moves the movable part with respect to the fixed part.

Therefore, the proposed solution departs from the known solutions given that it takes advantage of the aerodynamic knowledge of the wing profiles and the *Bernouilli's* principle for generating a shifting force which moves a component into shifting.

This solution optimizes efficiency given that a great precision is not necessary to produce profiles, although high pressure drops are obtained which enable to obtain high shifting forces of the movable component, specifically thanks to the fluid collection area.

Advantageously, the channel is delimited by a wall (21, 22) having a back (L') and a belly (L'') which confer a predetermined profile to said wall (21, 22).

Advantageously, said profile is configured in such a way that when in use is hit by a fluid, it determines an acceleration of fluid on the back (L') with consequent formation of a low-pressure area outside the back (L') and a deceleration of fluid which skims the belly (L") thereby determining a high-pressure area in correspondence of the belly.

Moreover, the fluid is contextually directed towards the collection area which has closed bottom thereby generating a high-pressure area inside the generator.

The high-pressure area is determined inside by the closed bottom which accumulates fluid under pressure in addition to the fluid which skims the belly and that locally increases pressure by decelerating. Thus, these two combined effects create a whole high-pressure area inside the generator and not only in areas which skim the belly of the profile but also inside.

Obviously, the flow is further directed in the collection area and further accumulation of flow remarkably contributes to increasing pressure in addition to the local pressure increase due to the profile itself of the belly.

Therefore, basically, this pressure drop is generated between outside and inside.

Advantageously, the movable part (20) is movable between an extracted position with respect to the fixed part and a retracted position inside said fixed part.

Advantageously, return means can be comprised for enabling the movable part to return to the retracted position inside the fixed part.

In this way, the working cycle can be then repeated.

Advantageously, said return means can comprise for example one or more outlet valves (150) that can be controlled between an open position and a closed position and vice versa and arranged in the fixed part.

In this way, the open valves enable to discharge to the outside the flow accumulated in the collection area inside the generator and therefore a substantial reinstatement of balance condition of pressures between outside and inside the wind generator.

In this way, the return can be for example obtained through the only push of the flow hitting the movable part.

Advantageously, said valves (one or more than one) can be arranged on the bottom base (10') of the fixed part.

Advantageously, an end stop can be provided for limiting at least the extraction motion of the movable part with respect to the fixed part.

Advantageously, the end stop can limit both the extraction motion and the retraction motion.

The object of the present invention is also a system as defined in claim 8.

Advantageously, in this case they are synchronized with each other in such a way that when one moves towards the extended position the other moves towards the retracted position.

The object of the present invention is also the use of a wind generator or of a system as defined in claim 9.

The object of the present invention is also an activation method of a wind generator as defined in claim 10.

According to the invention, the method provides for the generation of a pressure drop when the wind generator is hit by airflow and with said pressure drop which determines an extraction motion of the movable part from the fixed part.

Advantageously, said pressure drop determines a greater pressure inside the generator than pressure outside the generator.

Advantageously, a return motion of the movable part into the fixed part can be provided after reduction or elimination of said pressure drop.

Advantageously, for example, this pressure drop can be reduced or eliminated by opening one or more vent valves which set the high-pressure area of the generator into communication with the outside.

Advantageously, in the event of two or more generators in series, they are synchronized with each other, for example because they are mechanically connected each other.

Advantageously, in all configurations of invention (therefore also in the event of single generator or the combination in series), the movable part of the generator provides an access mouth at the front, namely the access opening to the channel, which can be modified in size thereby being able to be enlarged to a maximum opening and/or to be narrowed to a minimum opening.

Advantageously, this change in size (for example diameter in the event of circular shape) enables to direct more or less entering airflow.

Advantageously, therefore, means for controlling the opening and/or closing degree of this access mouth can be provided.

### Brief description of the drawings

The invention, in one or more of its embodiments, will be described in details below according to the following drawings:
Figure 1 shows the two components constituting the wind generator subject-matter of the invention, according to a section passing through the longitudinal axis of symmetry;
Figure 2 shows the flow which hits the wind generator still shown in the same section of figure 1;
Figure 3 shows a configuration in which there are two generators positioned in series;
Figures from 4 to 7 shows various possible configurations (in particular possible shapes) of wind generators according to the invention;

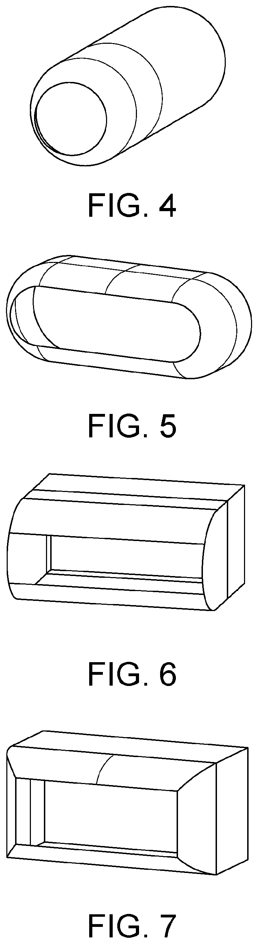

Figures 8A and 8B show two wind generators in series, showing as non-limiting example the shape like the one of figure 6;
Figure 9 shows a possible kinematic motion of the valves of figure 3;
The sequence of figures 10 and 11 shows respectively an extraction motion (figure 10) of the movable part from the fixed part and a retraction motion (figure 11) of the movable part into the fixed part during its functioning;
Figures 12A and 12B show an example of a solution for achieving an end stop which limits the extraction/retraction stroke from the movable part with respect to the fixed part;
Figures 13 and 14 show a further example of application of two wind generators according to the invention positioned in series.

### Detailed description of some embodiments of invention

The object of the present invention is a wind generator 1 comprising a fixed part 10 and a movable part 20 configured to at least shift with respect to the fixed part 10.

The fixed part forms a collection area for a fluid whereas the movable part forms a through-channel which enables to direct fluid which hits in use the generator, from outside the wind generator towards the collection area of the fixed part.

The movable part has such a profile that, when it is hit by a flow in use, a low-pressure area is generated outside the generator with respect to a high-pressure area which is formed inside the generator through the collection area where the flow is directed and accumulated.

In this way, this pressure difference determines an extraction motion of the movable part 20 with respect to the fixed part.

Therefore, the wind generator is described both structurally and functionally.

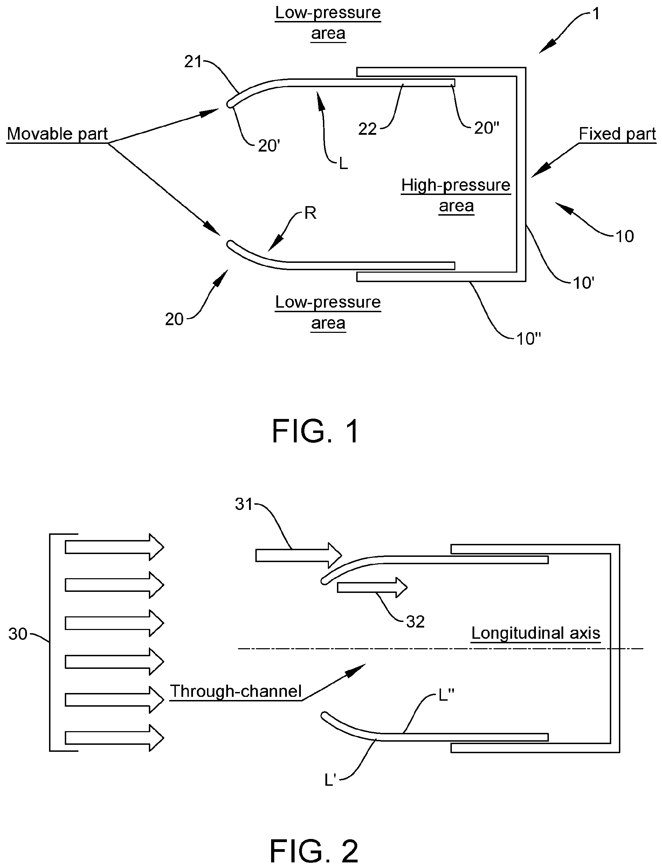

From a structural point of view, the wind generator 1, with reference to figure 1, provides a movable part and a fixed part.

In particular, the movable part can at least slide with respect to the fixed part in such a way that it can have an extraction/retraction motion from/into the fixed part.

More specifically, the fixed part has been also indicated in figure 1 with number 10, whereas the movable part has been also indicated with number 20.

As well highlighted in figure 1, the fixed part forms a collection area of fluid (in particular, gas, such as air, specifically deriving from the wind), thereby actually stopping the fluid and generating a high-pressure area.

Instead, the movable part is necessary to direct part of the fluid into the collection area relative to the fixed part, in order to create said low-pressure area and contributing to creating a low-pressure area outside the wind generator.

Therefore, figure 1 shows the high-pressure area and the low-pressure area.

In this way, a pressure drop is created which is responsible for the extraction motion of the movable part from the fixed part, this motion can be used for example to generate renewable energy like in the case of all other well-known wind generators.

Obviously, the low-pressure area significantly contributes to creating this pressure drop (pressure delta) between the inside of the wind generator and the outside and which therefore determines the movement of the movable part 20 with respect to the fixed part 10.

Therefore, more specifically, this generator has been devised to fully take advantage of wind energy and enables to obtain efficiencies greater than those of other generators.

Differently from the most common generator already existing which rotate (like in the case of horizontal or vertical axis wind turbines) or oscillate (like in the case of generators which take advantage of vortices created in the slipstream of generator), this generator moves going towards the current itself.

This is possible thanks to the so-called hydrodynamic paradox, namely the "Venturi" effect which is exactly a consequence of the *"Bernouilli"'s* principle. In fact, this law explains that the speed of a fluid is strictly connected to the pressure of the fluid itself. Specifically, a low pressure is associated with a high speed whereas on the contrary if the speed is low, then a high-pressure condition will occur.

This is indeed the principle which is used by the following generator and which allows to return current itself.

Therefore, the fixed component 10 is necessary to stop part of the airflow thus contributing to creating a region (also called "area" in figure 1) with high pressure. Instead, the movable part 20 must be able to enable a part of air to be directed towards the fixed component. In order to do that, it shapes a through-channel whose walls delimiting it have a specific profile such that air is free to pass decelerating in its motion upon entry into the channel and thus creating the high-pressure area and accelerating for that flow part which skims the channel outside thereby creating a low-pressure area outside.

The pressure difference obtained in this way pushes the movable part of the generator to return the current and this movement can be then transmitted to any energy production device, such as an alternator (or anyway a machine which transforms mechanical energy into other energy sources such as electricity) to convert the power extracted from the wind.

Therefore, as outlined in figure 1, in order to be able to create a collection area of gaseous flow (generally air, such as wind), the fixed part 10 has its closed bottom.

Therefore, it comprises a base 10' (the closed bottom) and lateral walls 10" which stand from the base 10', preferably in an orthogonal way. An opening for the access of the flow is present on the part opposite to the base 10'.

Therefore, the shape of the fixed part is with closed bottom and can be for example cup-shaped, as outlined in figure 1.

Therefore, for example, the fixed part can be of cylindrical shape with the base 10' which forms a closed bottom and the opposite base obviously open to enable the access of the flow.

Going to the movable part 20, as mentioned, it moves with respect to the fixed part and then it can return the current flow. Therefore, it is movable relatively and with respect to the fixed part.

Also the movable part can have a shape similar to a cylinder but it is anyway open in correspondence of its two bases to enable, as evident from figure 1 and figure 2, the entry of the flow and thus defining a through-channel with a directing path of flow towards the collection area which defines the high-pressure area relative to the fixed part.

Therefore, the movable part can have a generally tubular shape.

According to the invention, said movable part 20 has a specific profile that retraces known wing profiles.

In particular, figure 1 shows in transversal section (therefore, a section which cuts the tubular element and the fixed part along their longitudinal axis) the profile of movable tubular element. The wall of the tubular element has the shape of a foil (L) of predetermined shape and thickness, having an attachment edge 20', an exit edge 20" and a bending radius R which connects the attachment edge with the exit edge.

Therefore, the foil (L) (see also figure 2 for example) has a back (L') and a belly (L") and, as explained below, the flow skims the back and the belly at different speeds and thus generating different pressures.

The back has the shape indicated in figure and therefore it is generated by the outer surface (skin) of foil facing the outside whereas the belly is still generated by the outer surface (skin) of the foil but it is the one facing inside (namely the high-pressure area).

Therefore, the profile is developed from the attachment edge towards the exit edge and provides a first bent section 21 with a predetermined bending radius R which connects to a second substantially rectilinear or rectilinear section 22.

Therefore, figure 1 shows said bent section 21 which connects to the rectilinear section 22 and figure 2 shows the back and the belly of the profile.

Therefore, the profile has such a shape that, starting from the entry opening through which the flow can enter, a progressive enlargement occurs which then remains steady in the rectilinear area 22.

Therefore, the profile is similar as a whole to the wing one and the bending with bending radius R, starting from the attachment edge 20' and moving towards the exit edge 20", is a profile which actually determines lift.

In fact, as outlined in figure 2, the arrows 30 highlight the undisturbed flow which depicts, for example, wind moving at a certain speed.

Therefore, as a whole, the movable part can be as mentioned, a tubular element open at the two bases with a profile like the one shown in the section of figure 1 and with such a diameter that it couples inside the cup body which forms the fixed part.

As per figure 2, the flow hits and therefore intercepts the attachment edge 20' and a part of the flow (31) therefore moves skimming the back (L') outside whereas another part of the flow (32) skims the belly (L").

The shape of this profile with bending radius between the attachment edge and exit edge, as well known in aerodynamics and fluid dynamics, determines a diversification of the speeds of the fluid itself.

In particular, the flow 31 (air in this case) which skims the back (L') from the attachment edge towards the exit edge accelerates thereby creating a depression or low-pressure area which develops outside the wind generator.

Instead, the flow 32 which skims the belly (L") undergoes, still as a consequence of the shape of the profile, a deceleration which determines a pressure increase and therefore determines the formation of a high-pressure area which, in addition, accumulates and progressively increases thanks to the presence of the closed bottom 10' which prevents air outflow and which accumulates it instead.

Therefore, this pressure delta between inside and outside (the delta increases upon increasing the amount of air accumulated inside the fixed part) determines a force acting on the movable part 20 which thus starts shifting with respect to the fixed part exiting from the fixed part.

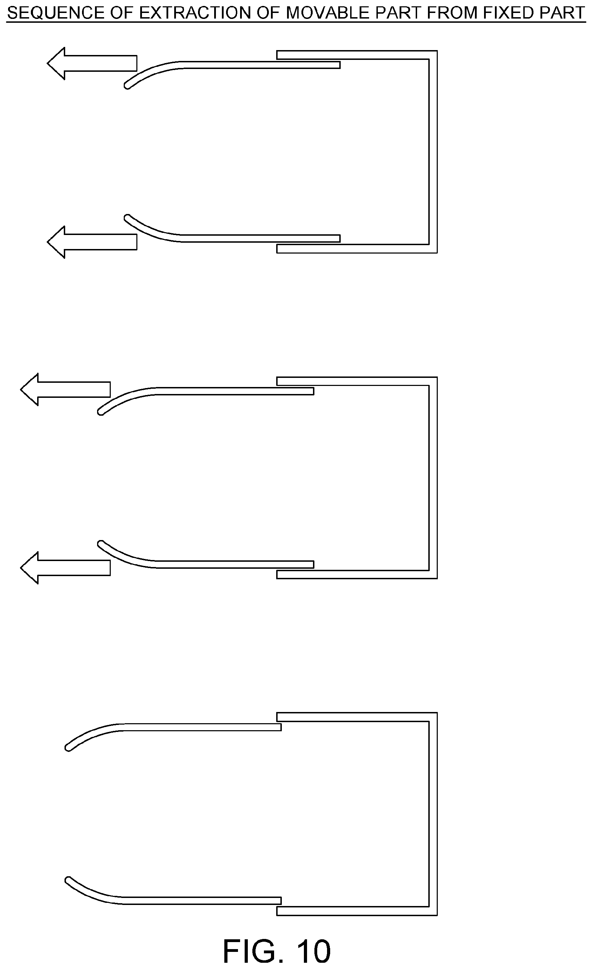

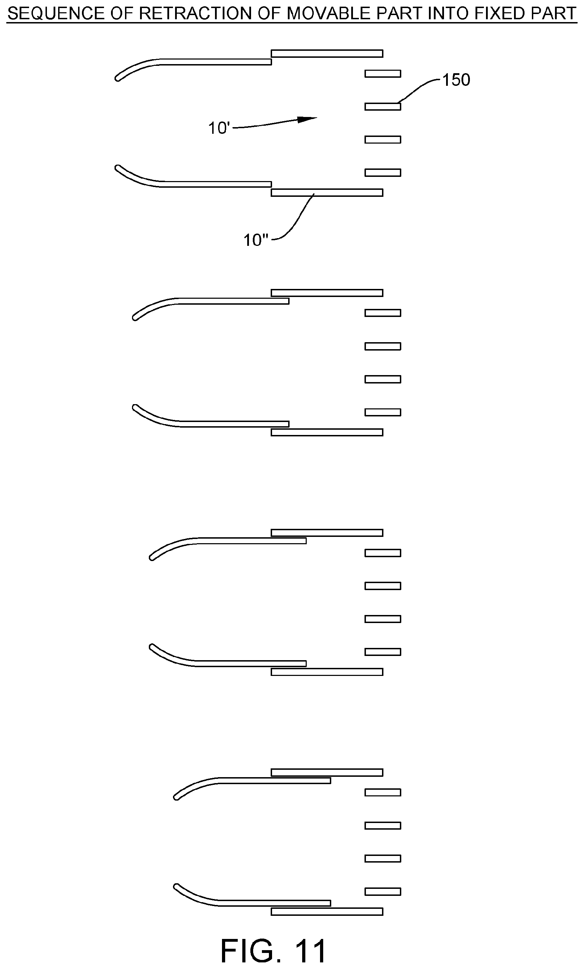

Figures 10 and 11 show the two steps of extraction and retraction.

Specifically, figure 10 shows a succession of positions of the movable part with respect to the fixed part in its extraction motion due to the generated overpressure whereas figure 11 shows, after opening of any valves present on the bottom of the fixed part (and that will be described below), an outflow which decreases the pressure with a consequent lowering of the pressure drop and a consequent return motion of the movable part inside the fixed part.

As described below, the movable part can, after lowering of the pressure drop, retract given that it is simply pushed by the flow which hits it.

Therefore, at least shifting in the extraction motion (mechanical energy) can be used in various different ways to obtain for example electric energy for example taking advantage of an alternator, an accumulator and systems already known per se and used in known wind generators.

Once the movable part has reached its maximum shifting in the extracting step, moving away from the fixed part, an end stop can be provided which blocks the forward shifting and favours the return motions.

Therefore, both shifting motion upon extraction and retraction can be limited by an end stop.

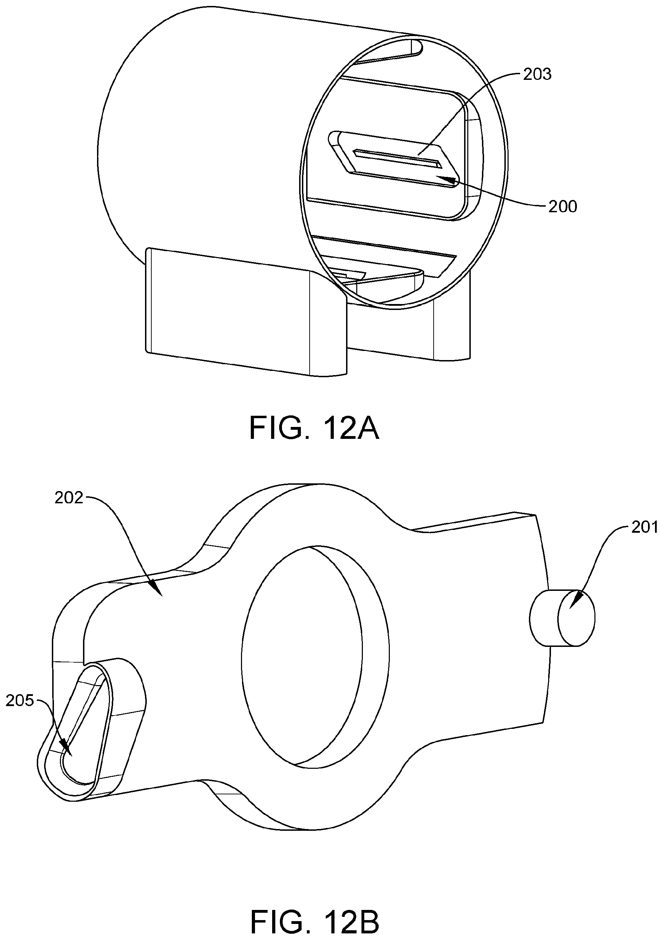

A possible solution of end stop which limits the maximum extraction and retraction stroke of the movable part with respect to the fixed part is outlined in figure 12A and 12B.

For example, the fixed part can have a slot 200 (for example dug into the wall itself) on at least one side thereof which forms a compulsory path for a pin 201 which is fixed to the movable part through a fixing plate 202.

The path obtained in the slot 200 is a forward path and a return path and with said forward and return path divided between them (therefore separated from each other) by a dividing wall 203.

Therefore, in the forward motion, the pin reaches the bottom of path and the same occurs in the return path thereby defining an end stop which limits the maximum extraction and retraction of the movable part with respect to the fixed part.

As inferable from figure 12A, the path has a certain bending radius of the bottom of the slot together with the presence of the dividing wall 203. Both cause the pin which moves along the forward path, once it has reached the stroke bottom, to be guided to the other part of path (the return one) thanks to the bending radius which forms a compulsory change in direction.

The opening of the valves, or anyway the elimination of pressure drop determines the return motion along the return path in which the pin 201 returns along its return guide up to the opposite stroke bottom.

In fact, the slot has the two opposite walls which form the stroke bottom.

Specifically, as better explained immediately below, the elimination of the pressure drop causes the movable part to be able to reenter the fixed part for example because it is simply hit by the airflow. The return push causes the pin 201, once it has reached the end stop, to be positioned on the return section until it reaches the end stop where the cycle is repeated.

Therefore, in this way, when the movable part is slidingly mounted with respect to the fixed part, the pin 201 is inserted into the slot 200 which forms the forward and return compulsory path which is limited by the walls of slot itself, acting as an end stop.

As it is inferable from this solution outlined in figure 12A and 12B, the presence of the pin can advantageously be used to enlarge the access opening of flow in the movable part.

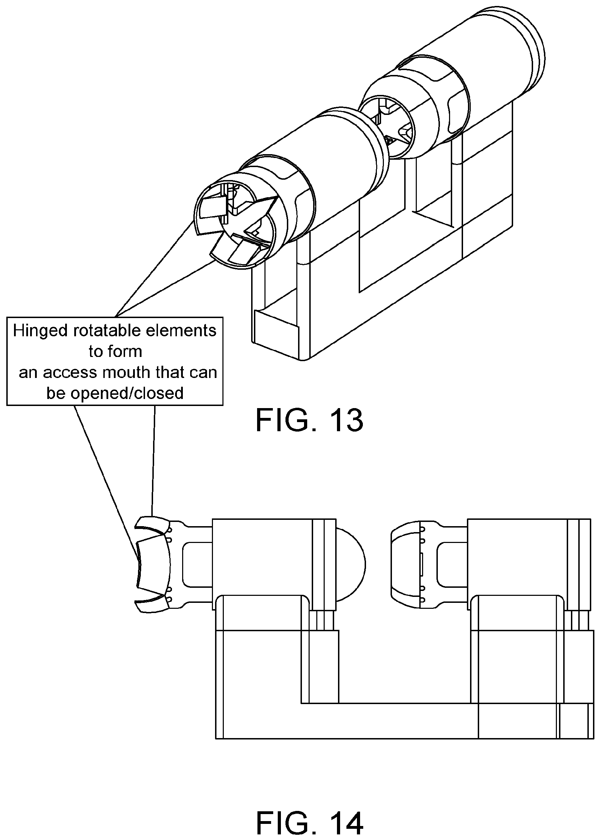

For this purpose, as outlined for example in figures 13 and 14, the front part relative to the movable part is formed by the elements hinged in such a way that the entry opening of fluid can be enlarged and closed like a mouth, thereby enlarging in the configuration in which the movable part is extended and retracting when the movable part is retracted inside the fixed part.

Any mechanism can be used to control this opening/closure indicated above.

For example, advantageously, the pin system 201 with plate 202 and with pin sliding into the guide 200 is a mechanism which can be advantageously used to control this opening/closure of the access mouth of fluid into the movable part.

In fact, thanks to the change of the forward and return path of the pin 201 along the guide divided by the wall 203, a sort of oscillation of plate 202 occurs, which, through its slot 205 can be connected to a relative transmission mechanism which transmits an opening and closing motion of the hinged elements constituting this sort of access mouth, as per figure 13 and 14.

As mentioned, after extraction, the system must then return to its initial configuration and therefore, specifically, the movable part must shift towards the opposite direction to return to an initial condition to repeat the cycle.

As described above, the return motion can be obtained for example by opening any valves present in the fixed part.

Therefore, enabling the airflow to flow from the collection area in the fixed part, the high-pressure area will no longer be present and, consequently, the movable part will be able to move back because it is simply pushed by the flow current which hits it, as it happens to any object immersed into a current flow (which will act a force directed to the direction of current itself on the body and therefore it will enable the movable part to move back). In this configuration, the return motion can also be used to generate energy (although with low efficiency) because the move-back speed of the movable part is not constrained.

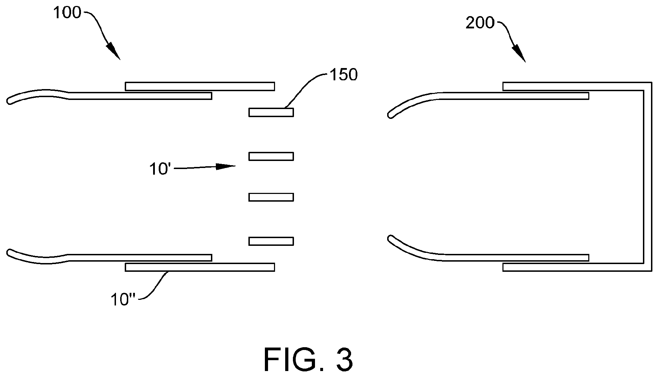

Specifically, with reference to figure 3 or to figure 11, opening/closing valves 150 can be provided in its closed bottom 10' of the cup body, outlined in figure 3 and in figure 11 in open condition.

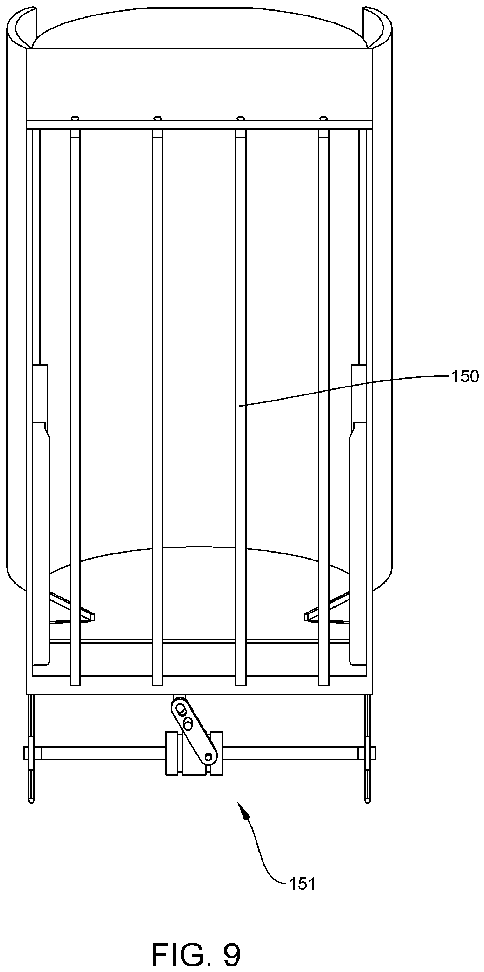

In this case of example, they have been devised as butterfly valves and anyway in the form of a portion of rotatable wall (see also the outline of figure 9).

In this way, when the valve is positioned horizontally, as per figure 3 or figure 11 in a condition parallel to the wall 10", it determines the formation of openings in the bottom base 10' and when it is positioned vertically with respect to the lateral wall 10", it determines a closure.

For example, figure 3 or figure 11 show all the open valves and it is clear that their counter-rotation determines the formation of closed bottom.

Obviously, any type of valves can be used and spread on the bottom wall 10' in any number or size (one or more than one).

Figure 9 shows for example a control leverage 151 which can be used to move a plurality of valves 150 between the two open and closed position.

Alternatively, elastic means or actuators or the like could provide a return to the initial condition without necessarily providing vent valves of flow even if, in this case, a high energy is necessary to restore a condition of return motion which overcomes the pressure drop.

Therefore, the solution which determines a reduction of high pressure, actually bringing near to a balance or to a balance of pressure is a preferred solution.

In fact, in the event of use of vent valves which eliminate the pressure drop, the return motion of the movable part into the fixed part is simply obtained by the action of the flow which hits the movable part (except for a minimum pressure drop).

Therefore, now the functioning in use is clear.

Starting from an initial condition in which the movable part 20 is retracted into the fixed part 10, the flow which hits the movable part creates a high-pressure area in the containment volume with closed bottom defined by the fixed part. At the same time, a whole depression area is created outside the wind generator (for example see figure 1) due to the specific profile.

Therefore, the profile of the movable part contributes to creating a low-pressure area outside it and a high-pressure area inside also due and above all to the fact that a closed bottom of the fixed part and therefore a "collection" area of flow is provided.

The pressure drop determines a force acting on the movable part 20 which therefore shifts by sliding with respect to the fixed part and thus extending outside it exactly like the shaft of an actuator would do with the shaft indeed sliding with respect to its seat.

Then it is necessary that, once the extension stroke towards the outside of the movable part 20 has ended, it returns to the retracted condition with respect to the fixed part to repeat the cycle.

For example, it can be obtained with one or more vent valves which zero the pressure drop thus enabling the outflow towards the outside of fixed part.

According to this configuration with a single wind generator 1, it is clear that the output is thus reduced from the return step of the movable part to the initial position in order to repeat the cycle.

In a particularly advantageous variant of invention, figure 3 shows a configuration in which, in order to overcome this technical inconvenience, at least two generators (100, 200) are present in succession and which therefore enable to optimize the functioning by alternating with each other.

In particular, when a movable part moves towards the extension condition from the fixed part, the other movable part of the other generator returns to the retracted position (initial starting position).

In this way, both generators alternate with each other still causing a movable part in extension step thereby being able to take advantage of this extension step to produce energy.

The solution with the valves to zero the pressure drop is optimal for this configuration in series, as indicated in figure 3.

Therefore, when in the first wind generator 100 the movable part is in the retraction step into the fixed part, the valves open thus enabling the flow, almost in an undisturbed way (if anything, slightly accelerated), to hit the second wind generator 200 positioned behind and which can be further provided with vent valves as well as being devoid of them.

In this way, when the first wind generator 100 has its movable part in the retraction step through the opening of the valves, the second positioned on the back, which has retracted its movable part, is hit by the flow, thereby extending its movable part towards the outside according to the provided description.

Once the second wind generator 200 has extracted its movable part and must return to the retracted position, the valves of first generator 100 are closed and in the meantime its movable part has reached the retracted position and therefore it is ready to repeat the cycle.

Therefore, any valves of the second generator are open to restore the return motion of the second generator whereas the first generator restarts the extraction motion.

In this way, alternatively, when a generator has the movable part in extraction step the other has the movable part in retraction step and vice versa and therefore, consequently, there is still a generator which has a movable part into motion towards extraction thus enabling to obtain energy in a continuous way and not alternately.

In order to optimize the functioning in the event of two or more generators positioned in succession, it is important to synchronize the movement with each other.

For synchronizing the two generators positioned behind each other, the movable part of the one moving back must do it at the same speed at which the other moves forward, so that, once the one moving forward reaches the end stop the other will be ready to begin moving forward.

In this configuration, the movable part which moves back will not be pushed by the current itself (like for example as suggested in the event of the single generator) despite the opening of valves given that the motion would be too slow, but it must be brought back to suitable speed.

For example, this is possible by mechanically connecting the two generators in order to perfectly synchronize the two movable parts and at the same time to cause the one moving forward to use part of the energy extracted by the wind in order to bring the other back.

Although a series of two wind generators has been described, it is clear that a series with a number of wind generators as described greater than two and positioned in series is not excluded.

Any arrangement in series and/or in parallel is possible depending on needs and with any number of wind generators.

As already mentioned, a system can be provided which during the extraction and retraction step of the movable front part of the generator, in addition to shifting, also enables an opening and/or closure of access mouth of flow to the movable part and therefore with an access mouth made by more hinged parts rotatable between the enlarged and closed position, as per figure 13 and 14.

The opening/closing rotation of access mouth can be for example by some degrees and in the previous pages of the present description a solution of end stop has been described structured in such a way to enable an angular rotation by some degrees to open/close this mouth contextually to the extraction and retraction shifting.

Anyway, this particular solution has a specific utility especially for any arrangement in series of two or more wind generators for the following reasons, as also shown in figure 13 and 14.

Specifically, the explained mechanism enables to open, or enlarge in other words, the mouth when the end stop of the extracted position of the movable part has been reached and to maintain this enlarged position until fully moving back where after change in direction due to the new extension, the mouth closes again thus maintaining the closed position until moving back again once the extraction has completed and the opposite end stop has been reached. The whole cycle is repeated periodically with an opening/closing mechanism that can be the one of figures 12A and 12B as well as different systems such as actuators, motors, etc.

The advantages of having an access mouth which can be open/closed between an enlarged and narrowed position are:

In the step in which the first generator (the one positioned in front) moves back, this opening rotation of the mouth enables a lower obstacle of air which hits the second generator, given that the configuration with this opening at least of the first generator enables a better passage of air which will hit the second generator and therefore a better efficiency of the second generator.

Therefore, at least the one moved forward has preferably this mouth which can be open/closed.

In addition, given that in the event of two or more generators in series their synchronization is convenient, it is clear that the movable part which moves back must be dragged by the one moving forward. Therefore, this also entails a synchronization of the speeds such that it can move back also at a speed greater than that of wind itself thus causing the generation of a new resistance to this particularly "quick" moving-back motion. Therefore, the rotation of the profile with consequent opening of the mouth enables the movable part which moves back to undergo a lower resistance to shifting and therefore a lower waste for making it move back.

Therefore, in particular, the fact that the mouth remains open in the return step enables a lower resistance to the movement of the movable part.

Figures from 4 to 7 obviously show possible shapes of the wind generator in question, without any limit.

The person skilled in the art will be able to assess and produce the configurations that he deems most suitable for his purposes.

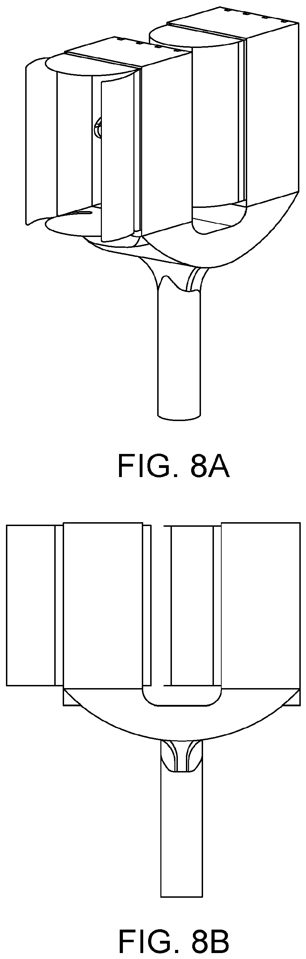

Figures 8A and 8B shows a further example of arrangement with two wind generators in series and supported by a support.

In all configurations, a solution in which the movable part can, if necessary, rotate around its longitudinal axis in addition to shifting into its extraction/retraction motion and have, if necessary, an access mouth of flow which can be enlarged/closed again is not excluded.

## Claims

1. A wind generator (1) comprising a fixed part (10) and a movable part (20) configured to at least slide with respect to the fixed part (10) between an extracted position and a retracted position and vice versa, the fixed part having a collection area for a fluid and the movable part forming a through-channel which enables to direct fluid from outside of the wind generator towards said collection area of the fixed part, the movable part having such a profile that when it is hit in use by a flow, a low-pressure area is generated outside the generator with respect to a high-pressure area which is generated inside the generator in such a way that said pressure difference determines an extraction motion of the movable part (20) with respect to the fixed part.

2. The wind generator (1), according to claim 1, wherein said channel is delimited by a wall (21, 22) having a back (L') and a belly (L") which confer a predetermined profile to said wall (21, 22) and with the profile which is configured in such a way that when it is hit by a fluid in use, it determines an acceleration of fluid on the back (L') with consequent formation of a low-pressure area outside the back (L') and a deceleration of fluid which skims the belly (L") thereby determining a high-pressure area in correspondence of the belly and contextually directing the fluid towards the collection area which has closed bottom thereby generating a high-pressure area inside the generator.

3. The wind generator (1), according to claim 1 or 2, wherein the movable part (20) is movable between an extracted position with respect to the fixed part and a retracted position inside said fixed part.

4. The wind generator (1), according to one or more of previous claims, wherein return means are comprised for enabling the movable part to return to the retracted position into the fixed part.

5. The wind generator (1), according to claim 4, wherein said return means comprise one or more vent valves (150) which can be controlled between an open position and a closed position and vice versa and arranged in the fixed part.

6. The generator, according to claim 5, wherein said vent valves (150) are arranged on a bottom base (10') of the fixed part.

7. The wind generator (1), according to one or more of previous claims, wherein an end stop is provided for limiting at least the extraction motion of the movable part with respect to the fixed part.

8. A system comprising one or more wind generators according to one or more of the previous claims arranged in series and/or in parallel, preferably synchronized with each other.

9. The use of a wind generator according to one or more of previous claims or of a system according to claim 8 for producing electric and/or mechanic energy.

10. An activation method of a wind generator (1) in accordance with the claim 1 and comprising a fixed part (10) and a movable part (20) which can at least slide with respect to the fixed part (10) between an extracted position and a retracted position and vice versa, the method providing the generation of a pressure drop when the wind generator (1) is hit by airflow and with said pressure drop which determines an extraction motion of the movable part (20) from the fixed part (10).

11. The method, according to claim 10, wherein said pressure drop determines greater pressure inside the generator than pressure outside the generator.

12. The method, according to claim 10 or 11, wherein a return motion of the movable part (20) into the fixed part (10) is provided after reduction or elimination of said pressure drop.

13. The method, according to claim 12, wherein said reduction or elimination of said pressure drop is obtained by opening one or more vent valves (150) which set the high-pressure area of the generator into communication with the outside.

## Patentansprüche

1. Windgenerator (1), umfassend einen festen Teil (10) und einen beweglichen Teil (20), der dazu ausgelegt ist, zumindest in Bezug auf den festen Teil (10) zwischen einer ausgefahrenen Position und einer eingefahrenen Position sowie umgekehrt zu gleiten, wobei der feste Teil einen Sammelbereich für ein Fluid aufweist und der bewegliche Teil einen Durchgangskanal bildet, der es ermöglicht, Fluid von außerhalb des Windgenerators zu dem Sammelbereich des festen Teils zu leiten, wobei der bewegliche Teil ein solches Profil aufweist, dass, wenn er im Gebrauch von einer Strömung getroffen wird, außerhalb des Generators ein Niederdruckbereich in Bezug auf einen Hochdruckbereich erzeugt wird, der innerhalb des Generators erzeugt wird, derart, dass der Druckunterschied eine Ausfahrbewegung des beweglichen Teils (20) in Bezug auf den festen Teil bewirkt.

2. Windgenerator (1) nach Anspruch 1, wobei der Kanal durch eine Wand (21, 22) begrenzt wird, die einen Rücken (L') und einen Bauch (L") aufweist, welche der Wand (21, 22) ein vorbestimmtes Profil verleihen, wobei das Profil derart ausgelegt ist, dass es, wenn es im Gebrauch von einem Fluid getroffen wird, eine Beschleunigung des Fluids am Rücken (L') mit daraus folgender Bildung eines Niederdruckbereichs außerhalb des Rückens (L') und eine Verzögerung des Fluids bewirkt, das den Bauch (L") streift, wodurch ein Hochdruckbereich am Bauch erzeugt wird und gleichzeitig das Fluid zu dem Sammelbereich geleitet wird, der einen geschlossenen Boden aufweist, wodurch ein Hochdruckbereich innerhalb des Generators erzeugt wird.

3. Windgenerator (1) nach Anspruch 1 oder 2, wobei der bewegliche Teil (20) zwischen einer ausgefahrenen Position in Bezug auf den festen Teil und einer eingefahrenen Position innerhalb des festen Teils beweglich ist.

4. Windgenerator (1) nach einem oder mehreren der vorhergehenden Ansprüche, wobei Rückführmittel enthalten sind, um dem beweglichen Teil zu ermöglichen, in die eingefahrene Position in den festen Teil hinein zurückzukehren.

5. Windgenerator (1) nach Anspruch 4, wobei die Rückführmittel ein oder mehrere Entlüftungsventile (150) umfassen, die zwischen einer offenen Position und einer geschlossenen Position sowie umgekehrt gesteuert werden können und in dem festen Teil angeordnet sind.

6. Generator nach Anspruch 5, wobei die Entlüftungsventile (150) auf einer Bodenbasis (10') des festen Teils angeordnet sind.

7. Windgenerator (1) nach einem oder mehreren der vorhergehenden Ansprüche, wobei ein Endanschlag vorgesehen ist, um zumindest die Ausfahrbewegung des beweglichen Teils in Bezug auf den festen Teil zu begrenzen.

8. System, umfassend einen oder mehrere Windgeneratoren nach einem oder mehreren der vorhergehenden Ansprüche, die in Reihe und/oder parallel angeordnet sind, vorzugsweise miteinander synchronisiert.

9. Verwendung eines Windgenerators nach einem oder mehreren der vorhergehenden Ansprüche oder eines Systems nach Anspruch 8 zum Produzieren von elektrischer und/oder mechanischer Energie.

10. Aktivierungsverfahren eines Windgenerators (1) nach Anspruch 1 und umfassend einen festen Teil (10) und einen beweglichen Teil (20), der zumindest in Bezug auf den festen Teil (10) zwischen einer ausgefahrenen Position und einer eingefahrenen Position sowie umgekehrt gleiten kann, wobei das Verfahren die Erzeugung eines Druckabfalls vorsieht, wenn der Windgenerator (1) von einem Luftstrom getroffen wird, und wobei der Druckabfall eine Ausfahrbewegung des beweglichen Teils (20) aus dem festen Teil (10) bewirkt.

11. Verfahren nach Anspruch 10, wobei der Druckabfall einen höheren Druck innerhalb des Generators als außerhalb des Generators bewirkt.

12. Verfahren nach Anspruch 10 oder 11, wobei nach Reduzierung oder Beseitigung des Druckabfalls eine Rückführbewegung des beweglichen Teils (20) in den festen Teil (10) hinein vorgesehen ist.

13. Verfahren nach Anspruch 12, wobei die Reduzierung oder Beseitigung des Druckabfalls durch Öffnen eines oder mehrerer Entlüftungsventile (150) erreicht wird, welche den Hochdruckbereich des Generators mit der Außenseite in Kommunikation setzen.

## Revendications

1. Aérogénérateur (1) comprenant une partie fixe (10) et une partie mobile (20) configurée pour au moins coulisser par rapport à la partie fixe (10) entre une position déployée et une position rétractée, et vice versa, la partie fixe comportant une zone de collecte d'un fluide et la partie mobile formant un canal traversant qui permet de diriger le fluide provenant de l'extérieur de l'aérogénérateur vers ladite zone de collecte de la partie fixe, la partie mobile présentant un profil tel que, lorsqu'il est frappé en fonctionnement par un écoulement, une zone de basse pression est générée à l'extérieur du générateur par rapport à une zone de haute pression générée à l'intérieur du générateur, de telle sorte que ladite différence de pression détermine un mouvement de déploiement de la partie mobile (20) par rapport à la partie fixe.

2. Aérogénérateur (1) selon la revendication 1, ledit canal étant délimité par une paroi (21, 22) comportant une face dorsale (L') et une face ventrale (L") qui confèrent un profil prédéterminé à ladite paroi (21, 22) et dont le profil étant configuré de telle sorte que, lorsqu'il est frappé par un fluide en fonctionnement, il provoque une accélération du fluide sur la face dorsale (L'), entraînant la formation d'une zone de basse pression à l'extérieur de la face dorsale (L'), et une décélération du fluide qui effleure la face ventrale (L"), créant ainsi une zone de haute pression en correspondance de la face ventrale et dirigeant simultanément le fluide vers la zone de collecte ayant un fond fermé, générant ainsi une zone de haute pression à l'intérieur du générateur.

3. Aérogénérateur (1) selon la revendication 1 ou 2, la partie mobile (20) étant mobile entre une position déployée par rapport à la partie fixe et une position rétractée à l'intérieur de ladite partie fixe.

4. Aérogénérateur (1) selon l'une ou plusieurs des revendications précédentes, des moyens de retour étant compris pour permettre à la partie mobile de revenir à la position rétractée dans la partie fixe.

5. Aérogénérateur (1) selon la revendication 4, lesdits moyens de retour comprenant une ou plusieurs soupapes d'aération (150) pouvant être commandées entre une position ouverte et une position fermée et vice versa, et disposées dans la partie fixe.

6. Générateur selon la revendication 5, lesdites soupapes d'aération (150) étant disposées sur une base inférieure (10') de la partie fixe.

7. Aérogénérateur (1) selon l'une ou plusieurs des revendications précédentes, une butée d'extrémité étant prévue pour limiter au moins le mouvement de déploiement de la partie mobile par rapport à la partie fixe.

8. Système comprenant un ou plusieurs aérogénérateurs selon l'une ou plusieurs des revendications précédentes, disposés en série et/ou en parallèle, de préférence synchronisés les uns avec les autres.

9. Utilisation d'un aérogénérateur selon l'une ou plusieurs des revendications précédentes ou d'un système selon la revendication 8 pour produire de l'énergie électrique et/ou mécanique.

10. Procédé d'activation d'un aérogénérateur (1) selon la revendication 1 et comprenant une partie fixe (10) et une partie mobile (20) qui peut au moins coulisser par rapport à la partie fixe (10) entre une position déployée et une position rétractée, et vice versa, le procédé prévoyant la génération d'une chute de pression lorsque l'aérogénérateur (1) est frappée par un flux d'air et ladite chute de pression déterminant un mouvement de déploiement de la partie mobile (20) par rapport à la partie fixe (10).

11. Procédé selon la revendication 10, ladite chute de pression déterminant une pression plus élevée à l'intérieur du générateur qu'à l'extérieur du générateur.

12. Procédé selon la revendication 10 ou 11, un mouvement de retour de la partie mobile (20) dans la partie fixe (10) étant prévu après réduction ou élimination de ladite chute de pression.

13. Procédé selon la revendication 12, ladite réduction ou élimination de ladite chute de pression étant obtenue par l'ouverture d'une ou plusieurs soupapes d'aération (150) qui mettent la zone à haute pression du générateur en communication avec l'extérieur.
